# EUROPÄISCHE PATENTSCHRIFT

(11) **EP 1 658 242 B1**
(45) Veröffentlichungstag und Bekanntmachung des Hinweises auf die Patenterteilung: **22.11.2006**
(21) Anmeldenummer: 04764302.8
(22) Anmeldetag: 19.08.2004
(51) Int. Cl.: C03B 20/00, C03B 19/06, B28B 1/26, C04B 35/14

(54) **SIO2-FORMKÖRPER, VERFAHREN ZU IHRER HERSTELLUNG UND VERWENDUNG**
SIO sb 2 /sb MOLDED BODIES, METHOD FOR PRODUCING THEM AND USE THEREOF
CORPS MOULES EN SIO SB 2 /SB , LEURS PROCEDES DE PRODUCTION, ET LEUR UTILISATION

(30) Priorität: 28.08.2003 DE 10339676
(43) Veröffentlichungstag der Anmeldung: 24.05.2006
(73) Patentinhaber: Wacker Chemie AG, 81737 München (DE)
(72) Erfinder: SCHWERTFEGER, Fritz, 84489 Burghausen (DE)
(74) Vertreter: Potten, Holger
(86) Internationale Anmeldenummer: PCT/EP2004/009318
(87) Internationale Veröffentlichungsnummer: WO 2005/028385

(56) Entgegenhaltungen:
- EP-A- 1 245 703
- EP-B- 0 196 717
- GB-A- 1 276 731
- US-A1- 2003 121 283
- US-B1- 6 381 986

## Beschreibung

Die Erfindung betrifft amorphe poröse offenporige SiO₂-Formkörper, Verfahren zu ihrer Herstellung und ihre Verwendung.

Amorphe poröse offenporige SiO₂-Formkörper werden auf vielen technischen Gebieten benutzt. Als Beispiele seien Filtermaterialien, Wärmedämmmaterialien oder Hitzeschilder genannt. Ferner können aus amorphen porösen offenporigen SiO₂-Formkörpern mittels Sinterung und/oder Schmelzen Quarzgüter aller Art hergestellt werden. Hochreine SiO₂-Formkörper können dabei z.B. als "preform" für Glasfasern oder Lichtleitfasern dienen. Darüber hinaus können auf diesem Wege auch Tiegel für das Ziehen von Siliziumeinkristallen hergestellt werden.

Amorphe poröse offenporige SiO₂-Formkörper können prinzipiell mittels Verpressen entsprechender SiO₂-Pulver oder über einen nasschemischen Prozess hergestellt werden. Bei den aus der Keramik bekannten Verfahren zum Verpressen von Pulvern z.B. kalt oder heiß isostatischen Pressverfahren müssen in der Regel Bindemittel organischer Natur zugesetzt werden, um einen stabilen Formkörper zu erhalten. Diese Bindemittel müssen in einem späteren Schritt wieder herausgelöst oder verbrannt werden. Das ist technisch aufwendig, teuer und führt zu ungewollten Verunreinigungen, die es insbesondere bei der Herstellung von Tiegeln zum Ziehen von Siliziumeinkristallen unbedingt zu vermeiden gilt.

Der bevorzugte Weg zur Darstellung von porösen SiO₂-Formkörpern ist daher der nasschemische Weg. Dabei unterscheidet man zwischen einer so genannten Sol-Gel Route, bei der der amorphe poröse offenporige SiO₂-Formkörper durch Hydrolyse und Kondensation von siliciumorganischen Verbindungen in einem Lösemittel hergestellt wird, einer kolloidalen Sol-Gel Route, bei der dem System zusätzlich noch SiO₂-Partikel zugesetzt werden, und einer so genannten Schlickerroute, bei der man SiO₂-Partikel in einem Lösemittel dispergiert und anschließend formt. Hauptnachteil der Sol-Gel Route ist der geringe resultierende Feststoffgehalt im Formkörper. Das führt gerade bei größeren Geometrien zu größten Riss- und Bruchproblemen. In der kolloidalen Sol-Gel Route wird durch die Zugabe von SiO₂-Partikeln ein höherer Füllgrad der Dispersion erreicht, so dass der resultierende Feststoffgehalt im Formkörper höher ist. Ein solches Verfahren ist in EP 705797 und in EP 318100 beschrieben. Doch auch hier liegen die resultierenden Feststoffgehalte nur zwischen 40 und 60 Gew.%, so dass die Riss- und Bruchproblematik nicht gelöst ist.

In WO01/17902 ist ein Verfahren beschrieben, bei dem durch die Verwendung von unterschiedlichen Partikelgrößen ein Feststoffgehalt erreicht werden kann, der bei über 80Gew.% liegt. Dies führt zu einer wesentlich höheren Festigkeit des SiO₂-Formkörpers, jedoch ist die Herstellung einer solchen Dispersion sehr aufwendig.

EP 653381 und DE-OS 2218766 offenbaren ein Schlickergussverfahren, bei dem eine Dispersion aus Quarzglasteilchen in Wasser hergestellt wird, und der SiO₂-Formkörper durch langsamen Wasserentzug an einer porösen Form gebildet wird. Auch hierbei werden Feststoffgehalte erreicht, die über 80Gew.% liegen.
Das Schlickergussverfahren ist jedoch aufgrund des diffusionsabhängigen Wasserentzuges sehr zeitintensiv und nur für dünnwandige Formteile anwendbar. Dieser Nachteil kann durch die Verwendung eines Druckgussverfahrens vermieden werden.

Wie z. B. in EP 1245703 oder EP0196717B1 beschrieben, wird dabei eine SiO₂-Partikel enthaltende Dispersion in eine Druckgussform einer Druckgussmaschine gegossen und über eine poröse Kunststoffmembran unter Bildung des SiO₂-Formkörpers entwässert.

Sämtliche bekannten amorphen porösen offenporige SiO₂₋Formkörper haben den großen Nachteil, im nassen oder getrockneten Zustand, d. h. im noch nicht durch Wärmebehandlung verfestigten Zustand, sehr fragil, riss- und bruchanfällig zu sein. Die bei keramischen Herstellprozessen bekannten Probleme der Mikrorissbildung, z. B. bei der Entformung, Trocknung oder dem Handling der SiO₂-Formkörper, führen zusätzlich sehr häufig zum Zerreißen oder Zerbrechen der Formkörper. Dies ist besonders dann ein großes Problem, wenn es sich um große SiO₂-Formkörper handelt, wie z. B. Rohre, Stangen oder Tiegel, insbesondere Tiegel für die Siliziumeinkristall Herstellung.
Da bei der Herstellung von hochreinen SiO₂-Formkörpern für Anwendungen im Lichtwellenleiter- oder Halbleiterbereich sehr häufig auf den Zusatz von Bindemitteln verzichtet werden muss, ist die Rissproblematik hier noch einmal größer.

Aufgabe der vorliegenden Erfindung war es daher, einen amorphen porösen offenporigen SiO₂-Formkörper mit verbessertem Rissbildungsverhalten zur Verfügung zu stellen.

Eine weitere Aufgabe der vorliegenden Erfindung war die Bereitstellung eines Verfahrens zur Herstellung des erfindungsgemäßen amorphen porösen offenporigen SiO₂-Formkörpers.

Die erstgenannte Aufgabe wird gelöst durch einen amorphen porösen offenporigen SiO₂-Formkörper, der dadurch gekennzeichnet ist, dass er aus zwei Schichten besteht, und die Schichten eine identische Struktur und Zusammensetzung besitzen.

Die Herstellung eines solchen SiO₂-Formkörpers erfolgt dadurch, das eine SiO₂-Partikel enthaltende Dispersion in eine Druckgussform einer Druckgussmaschine gepumpt wird, in der die Dispersion unter Bildung des SiO₂-Formkörpers über eine innere und eine äußere poröse Kunststoffmembran entfeuchtet wird.

Die Dispersion weist dabei vorzugsweise einen Füllgrad an amorphen SiO₂-Partikeln zwischen 10 und 80 Gew.%, vorzugsweise zwischen 50 und 80 Gew.% und besonders bevorzugt zwischen 65 und 75 Gew.% auf.

Als Dispersionsmittel können polare oder unpolare organische Lösungsmittel, wie z.B. Alkohole, Ether, Ester, organische Säuren, gesättigte oder ungesättigte Kohlenwasserstoffe, oder Wasser oder deren Mischungen vorliegen.

Vorzugsweise liegen Alkohole wie Methanol, Ethanol, Propanol, oder Azeton oder Wasser oder deren Mischungen vor. Besonders bevorzugt liegen Azeton und Wasser oder deren Mischungen vor, ganz besonders bevorzugt liegt Wasser vor.

Besonders bevorzugt werden die oben beschriebenen Dispersionsmittel in hochreiner Form verwendet, wie sie z.B. nach literaturbekannten Verfahren erhalten werden können oder käuflich erhältlich sind.

Bei der Verwendung von Wasser wird vorzugsweise speziell gereinigtes Wasser verwendet, das einen Widerstand von ≥ 18 MegaOhm*cm aufweist.

Vorzugsweise wird dem Wasser eine mineralische Säure, wie z.B. HCl, HF, H₃PO₄, H₂SO₄ oder Kieselsäure oder ionogene Zusatzstoffe wie z.B. Fluorsalze zugesetzt. Besonders bevorzugt ist dabei der Zusatz von HCl oder HF, ganz besonders bevorzugt HF.
Es können auch Mischungen der genannten Verbindungen eingesetzt werden. Dabei sollte in der Dispersion ein pH-Wert von 2-7, vorzugsweise 3-6, eingestellt werden.

Alternativ und ebenfalls bevorzugt kann dem Wasser eine mineralische Base zugesetzt werden, wie z.B. NH₃, NaOH oder KOH. Besonders bevorzugt ist NH₃ und NaOH, ganz besonders bevorzugt NH₃. Es können aber auch Mischungen der genannten Verbindungen eingesetzt werden. Dabei sollte ein pH-Wert von 7-11, vorzugsweise 9-10, eingestellt werden.

Die Herabsetzung bzw. Erhöhung des pH-Wertes führt während der Scherbenbildung zu einer festeren Scherbe, so dass ein stabilerer SiO₂-Formkörper gebildet wird.

Die spezifische Dichte der SiO₂-Partikel sollte bevorzugt zwischen 1,0 und 2,2 g/cm³ liegen. Besonders bevorzugt haben die Partikel eine spezifische Dichte zwischen 1,8 und 2,2 g/cm³. Insbesondere bevorzugt haben die Partikel eine spezifische Dichte zwischen 2,0 und 2,2 g/cm³.

Bevorzugt sind ferner SiO₂-Partikel mit ≤ 3 OH-Gruppen pro nm² auf ihrer äußeren Oberfläche, besonders bevorzugt ≤ 2 OH-Gruppen pro nm², und ganz besonders bevorzugt ≤ 1 OH-Gruppen pro nm².

Die SiO₂-Partikel sollten eine Korngrößenverteilung mit einem D50-Wert zwischen 1-200 µm, bevorzugt zwischen 1-100 µm, besonders bevorzugt zwischen 10-50 *µ*m und ganz besonders bevorzugt zwischen 10-30 µm, aufweisen. Ferner ist eine möglichst enge Partikelverteilung von Vorteil.

Bevorzugt sind SiO₂-Partikel mit einer BET-Oberfläche von 0,001 m²/g - 50 m²/g, besonders bevorzugt von 0,001 m²/g - 5m²/g, ganz besonders bevorzugt von 0,01 m²/g - 0,5 m²/g.

Die SiO₂-Partikel sollten vorzugsweise einen kristallinen Anteil von höchstens 1% aufweisen. Vorzugsweise sollten sie ferner eine möglichst geringe Wechselwirkung mit dem Dispersionsmittel zeigen.

Diese Eigenschaften haben amorphe SiO₂-Partikel unterschiedlicher Herkunft, wie z.B. nachgesinterte Kieselsäure (Fused Silica) sowie jede Art von amorphem gesinterten oder kompaktiertem SiO₂. Sie sind daher vorzugsweise zur Herstellung der erfindungsgemäßen Dispersion geeignet.

Entsprechendes Material lässt sich in an sich bekannter Art und Weise in der Knallgasflamme herstellen. Es ist auch käuflich erhältlich, z.B. unter der Bezeichnung Excelica^{®} bei Tokuyama, Japan.

Wenn obige Kriterien erfüllt werden, können auch Partikel anderer Herkunft verwendet werden, wie z.B. Naturquarz, Quarzglassand, glasige Kieselsäure, zermahlene Quarzgläser bzw. gemahlener Quarzglasabfall sowie chemisch hergestelltes Kieselglas, wie z.B. gefällte Kieselsäure, hochdisperse Kieselsäure (Fumed Silica, hergestellt mittels Flammenpyrolyse), Xerogele, oder Aerogele.

Bei den amorphen SiO₂-Partikeln handelt es sich bevorzugt um gefällte Kieselsäuren, hochdisperse Kieselsäuren, Fused Silica oder kompaktierte SiO₂-Partikel, besonders bevorzugt um hochdisperse Kieselsäure oder Fused Silica, ganz besonders bevorzugt um Fused Silica. Mischungen der genannten unterschiedlichen SiO₂-Partikel sind ebenfalls möglich und bevorzugt.

Weiterhin bevorzugt werden amorphe SiO₂-Partikel mit einer unterschiedlichen Korngrößenverteilung eingesetzt. Solche SiO₂₋Partikel erhält man durch Beimischung an SiO₂-Partikeln, wie z.B. Fused oder Fumed Silica mit einer Korngröße von 1-100 nm, bevorzugt 10 bis 50 nm, in einer Menge von 0,1 bis 50 Gew.%, besonders bevorzugt in einer Menge von 1 bis 30 Gew.%, ganz besonders bevorzugt in einer Menge von 1 bis 10 Gew.%, zu den o.g. amorphen SiO₂-Partikel.

Die nanoskaligen SiO₂-Partikel fungieren dabei als eine Art anorganischer Binder zwischen den wesentlich größeren SiO₂₋Partikeln, nicht aber als Füllmaterial um einen höheren Füllgrad zu erreichen. Die SiO₂-Partikel besitzen in der Dispersion damit bevorzugt eine bimodale Partikelgrößenverteilung.

In einer besonderen Ausführungsform liegen die oben beschriebenen Partikel in hochreiner Form vor, d.h. mit einem Fremdatomanteil insbesondere an Metallen von ≤ 300 ppmw (parts per million per weight), bevorzugt ≤ 100 ppmw, besonders bevorzugt ≤ 10 ppmw und ganz besonders bevorzugt ≤ 1 ppmw.

In einer weiteren speziellen Ausführungsform kann die Dispersion zusätzlich Metallpartikel, Metallverbindungen oder Metallsalze enthalten. Bevorzugt sind dabei Verbindungen, die im Dispersionsmittel löslich sind, besonders bevorzugt sind wasserlösliche Metallsalze.

Die Zusatzstoffe Metallpartikel, Metallverbindungen oder Metallsalze können während und/oder nach der Herstellung der Dispersion zugesetzt werden.

Bei der Herstellung der Dispersion wird das Dispersionsmittel vorgelegt und die SiO₂-Partikel langsam und bevorzugt stetig zugegeben. Die SiO₂-Partikel können aber auch in mehreren Schritten (portionsweise) zugegeben werden.

Über die Auswahl der SiO₂-Partikelgröße und Korngrößen lässt sich die Porengröße und Verteilung im aus der Dispersion hergestellten SiO₂-Formkörper gezielt einstellen.

Als Dispergiergeräte können alle dem Fachmann bekannten Geräte und Vorrichtungen verwendet werden. Bevorzugt sind ferner Geräte, die keine Metallteile enthalten, die mit der Dispersion in Berührung kommen könnten, um eine Metallkontamination durch Abrieb zu vermeiden.

Die Dispergierung sollte bei Temperaturen zwischen 0°C und 50°C, bevorzugt zwischen 5°C und 30°C, erfolgen.

Vor und/oder während und/oder nach der Dispergierung können mittels dem Fachmann bekannter Methoden, wie z.B. Vakuum, die eventuell in der Dispersion enthaltenen Gase wie z.B. Luft entfernt werden. Bevorzugt wird dies während und/oder nach der vollständigen Dispergierung durchgeführt.

In einer so hergestellten homogenen Dispersion kommt es für mindestens 5 min, bevorzugt für mindestens 30 min, zu keiner Sedimentation der Partikel.

Anschließend wird die Dispersion in eine Druckgussform einer Druckgussmaschine überführt, in der die Dispersion unter Druck und unter Bildung des SiO₂ Formkörpers über eine innere und eine äußere poröse Membran entwässert wird.

Das Befüllen der Druckgussform mit der Dispersion erfolgt in einer dem Fachmann bekannten Art und Weise, wie z.B. mittels Pumpen.

Das Befüllen kann dabei mit jedem beliebigen Druck erfolgen, bevorzugt jedoch mit Drücken zwischen 0,5 und 100 bar, besonders bevorzugt mit Drücken zwischen 5 und 30 bar und ganz besonders bevorzugt zwischen 5 und 10 bar.

Die Scherbenbildung erfolgt bevorzugt unter Drücken zwischen 0,5 und 100 bar, besonders bevorzugt mit Drücken zwischen 5 und 30 bar und ganz besonders bevorzugt zwischen 5 und 10 bar.

Die gebildeten Scherbenstärken liegen je nach dem gewünschten Formkörper zwischen 1 und 50 mm, bevorzugt zwischen 5 und 30mm.

Je nach Scherbenstärke, porösen Membran und vorliegendem Druck werden zur Bildung von formstabilen Scherben zwischen 5 und 90min benötigt.

Das Überführen der Dispersion und die Scherbenbildung kann bei Temperaturen von 0°C bis zum Siedepunkt des Dispergiermittels durchgeführt werden. Bevorzugt sind Temperaturen zwischen 20°C und 30°C.

Die Druckgussform besteht aus zwei porösen Membranteilen, die einen abgeschlossenen Zwischenraum ausbilden, der der gewünschten Formkörperform entspricht. An einer oder mehreren Stellen liegt eine entsprechende Zuleitung in der Membran vor, die das Befüllen der geschlossenen Druckgussform ermöglicht.

Die beiden Druckgussformteile werden mit einem entsprechenden Schließdruck zusammengehalten, damit ein Befüllen und eine Scherbenbildung unter den oben beschriebenen Drücken möglich ist. Als poröse Membranen werden vorzugsweise Membranen eingesetzt, die eine offene Porosität zwischen 5 und 60 Vol.%, bevorzugt zwischen 10 und 30 Vol.%, besitzen. Die Porengröße der Membran kann größer, kleiner oder gleich der Größe der verwendeten SiO₂-Partikel sein. Bevorzugt wird eine Membran mit einer Porengröße zwischen 10 Nanometern und 100 Mikrometern, besonders bevorzugt zwischen 100 Nanometern und 50 Mikrometern, ganz besonders bevorzugt zwischen 100 Nanometern und 30 Mikrometern, verwendet.

Die poröse Membran ist vorzugsweise vollständig durch das Lösemittel der Dispersion, bevorzugt Wasser, benetzbar, damit eine gleichmäßige Scherbenbildung erfolgen kann.

Als Material für die Membran eignet sich jeder dem Fachmann bekannte Kunststoff, der chemisch beständig ist und keine freien, insbesondere keine metallischen, Rückstände enthält. Bevorzugt geeignet sind Kunststoffe, die bereits im kommerziellen Druckschlickerguss verwendet werden. Besonders bevorzugt sind Polymethacrylate und Polymethylmethacrylate.

Die Dicke der porösen Membran richtet sich nach der Form des herzustellenden Formkörpers.

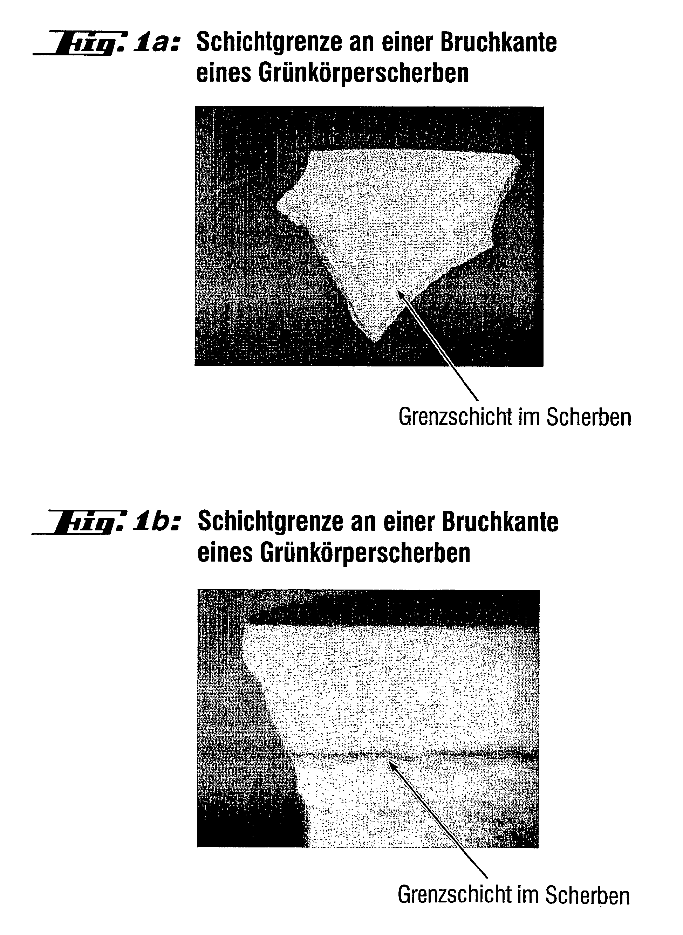

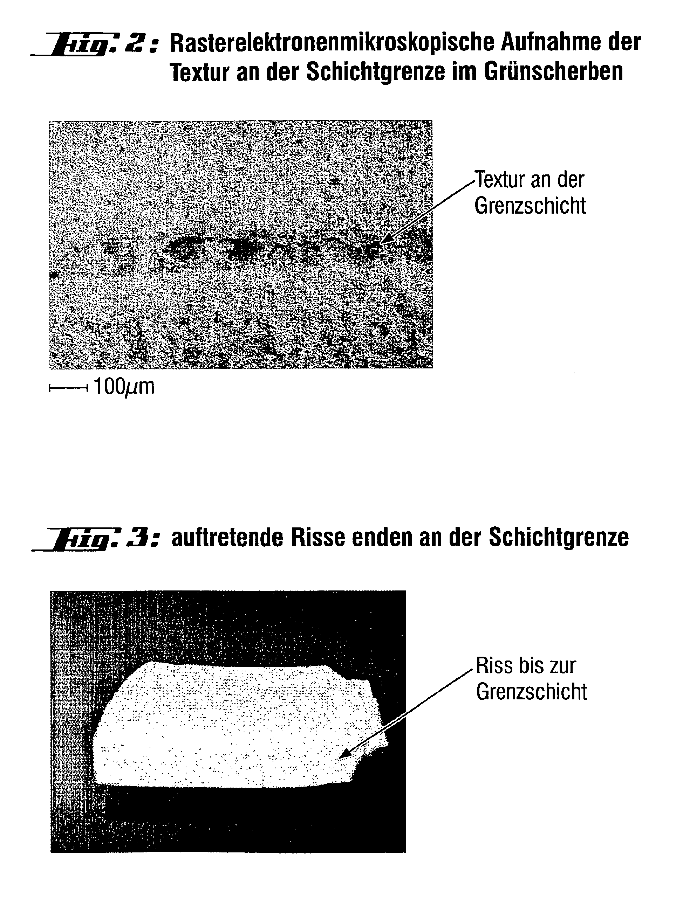

Der Entzug des Wassers aus der Dispersion erfolgt nach beiden Seiten hin in die porösen Druckgussmembranteile hinein. Der Scherben bildet sich dabei von beiden Seiten von außen nach innen. Die beiden Schichten wachsen zum Ende der Scherbenbildung hin zusammen. Ein so gebildeter Scherben besteht immer aus 2 Schichten. Die Schichten sind vom strukturellen Aufbau und der Zusammensetzung identisch aufgebaut. Eine so genannte Schichtgrenze ist mit dem Auge nur an Bruchkanten von Scherben zu erkennen (Fig. 1). In starker Vergrößerung (z.B. mit dem Rasterelektronenmikroskop) ist eine lokal begrenzte, minimale Dichtevarianz zu erkennen (eine so genannte Textur, Fig. 2).

Nach der Scherbenbildung erfolgt die Entformung der SiO₂₋Formkörper unter Auseinander fahren der zwei Druckgussformteile und gleichzeitiger Beaufschlagung der porösen Membranen mit Druckluft und/oder Wasser. Die Druckluft bzw. das Wasser löst den Scherben von der porösen Membran, indem etwas von dem in die poröse Membran eingedrungenen Wasser in umgekehrter Richtung zum Scherben hin gedrückt wird und einen dünnen Wasserfilm zwischen Scherben und Membran bildet.

Die so gebildeten Scherben weisen einen Feststoffgehalt zwischen 80 und 95 Gew.% auf.

Das Trocknen des entformten SiO₂-Formkörpers erfolgt mittels dem Fachmann bekannter Methoden wie z.B. vakuumtrocknung, Trocknung mittels heißer Gase wie z.B. Stickstoff oder Luft, Kontakttrocknung oder Mikrowellentrocknung. Auch eine Kombination der einzelnen Trocknungsmethoden ist möglich. Bevorzugt ist eine Trocknung mittels Mikrowelle.

Das Trocknen erfolgt bei Temperaturen im Formkörper zwischen 25°C und dem Siedepunkt des Dispergiermittels in den Poren des Formkörpers.

Die Trockenzeiten sind abhängig vom zu trocknenden Volumen des Formkörpers, von der maximalen Schichtdicke, von dem Dispergiermittel und von der Porenstruktur des Formkörpers.

Beim Trocknen des Formkörpers tritt ein geringer Schrumpf auf. Der Schrumpf ist abhängig vom Füllgrad des feuchten Formkörpers. Bei einem Füllgrad von 80 Gew.% ist der Volumenschrumpf ≤ 2,5% und der lineare Schrumpf ≤1,0%. Bei höherem Füllgrad ist der Schrumpf entsprechend geringer.

Die Dichte des erfindungsgemäßen Formkörpers liegt zwischen 1,4 g/ cm³ und 1, 8 g/cm³.

Erfindungsgemäße Formkörper, die aus einer Dispersion mit bimodaler Korngrößenverteilung hergestellt werden, zeigen eine höhere Festigkeit als Grünkörper, die aus einer Dispersion mit monomodaler Korngrößenverteilung hergestellt wurden.

In einer besonderen Ausführungsform, bei der in allen Schritten mit hochreinen Materialien gearbeitet wird, weist der Formkörper einen Fremdatomanteil insbesondere an Metallen von ≤300 ppmw, bevorzugt ≤ 100 ppmw, besonders bevorzugt ≤ 10 ppmw und ganz besonders bevorzugt ≤ 1 ppmw, auf.

Bei dem auf diese Weise erhältlichen Formkörper handelt es sich um einen amorphen, offenporigen, SiO₂-Formkörper beliebiger Dimensionen und Gestalt, der aus zwei Schichten besteht, die in ihrer Struktur und Zusammensetzung gleich aufgebaut sind.

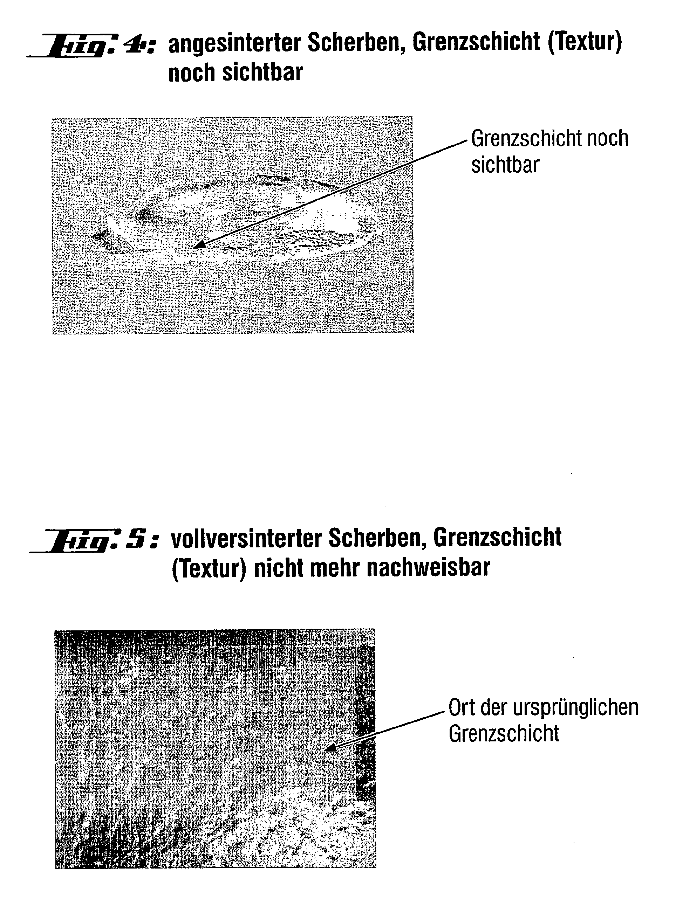

Überraschend wurde nun gefunden, dass wenn es z. B. während der Entformung, der Trocknung oder dem Handling zu Mikrorissen auf der Innen- und/oder Außenseite des Formkörpers kommt, die Risse sich nur bis zur Ebene, wo die beiden Schichtgrenzen des Formkörpers zusammenkommen, fortpflanzen. Dadurch bleibt der Formkörper stabil und die Geometrie wird beibehalten (Fig. 3).

Die erfindungsgemäßen Formkörper können aufgrund ihrer besonderen Eigenschaften vielfältig verwendet werden, z.B. als Filtermaterialien, Wärmedämmmaterialien, Hitzeschilder, Katalysatorträgermaterialien sowie als "preform" für Glasfasern, Lichtleitfasern, optische Gläser oder Quarzgüter aller Art dienen.

In einer weiteren speziellen Ausführungsform können die porösen Formkörper mit unterschiedlichsten Molekülen, Stoffen und Substanzen ganz oder teilweise versetzt werden. Bevorzugt sind Moleküle, Stoffe und Substanzen, die katalytisch aktiv sind. Dabei können alle dem Fachmann bekannten Methoden angewendet werden, wie sie z.B. in US 5655046 beschrieben sind.

In einer speziellen Ausführungsform können die so erhaltenen Formkörper noch einer Sinterung unterzogen werden. Dabei können alle dem Fachmann bekannten Methoden, wie z.B. Vakuumsintern, Zonensintern, Sintern im Lichtbogen, Sintern mittels Plasma oder Laser, induktives Sintern oder Sintern in einer Gasatmosphäre bzw. Gasstrom verwendet werden.

In einer weiteren speziellen Ausführungsform können die so erhaltenen Formkörper wie in US-A-2003-0104920, DE-A-10260320 und DE-A-10324440 beschrieben noch mittels CO₂-Laser verglast werden.

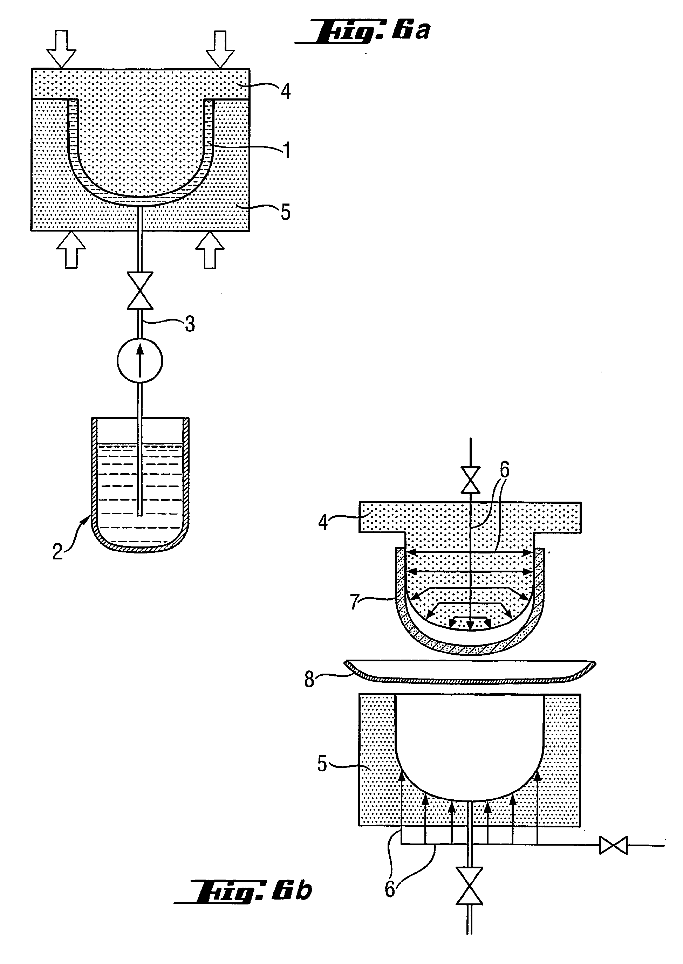

Während der Sinterung geht der Schichtaufbau der amorphen porösen offenporigen Formkörper verloren. Erfolgt eine vollständige Sinterung, so ist kein Schichtaufbau im Formkörper mehr vorhanden. Ferner sind auch keine Texturen mehr in den vollständig gesinterten Kieselglasbereichen mehr nachweisbar (Fig. 4 und 5) .

Auf diese Weise lässt sich ein 100% amorpher (kein Cristobalit), transparenter, gasundurchlässiger gesinterter Kieselglasformkörper mit einer Dichte von mindestens 2,15 g/cm³, vorzugsweise 2,2 g/cm³, herstellen. In einer besonderen Ausführungsform weist der gesinterte Kieselglasformkörper keine Gaseinschlüsse und vorzugsweise eine OH-Gruppen-Konzentration von ≤ 1 ppm auf. In einer besonderen Ausführungsform, bei der in allen Schritten mit hochreinen Materialien gearbeitet wird, weist der gesinterte Formkörper einen Fremdatomanteil insbesondere an Metallen von ≤ 300 ppmw, bevorzugt ≤ 100 ppmw, besonders bevorzugt ≤ 10 ppmw und ganz besonders bevorzugt ≤ 1ppmw, auf. Die so hergestellten Kieselglasformkörper eignen sich prinzipiell für alle Anwendungen, in denen Kieselglas verwendet wird. Bevorzugte Anwendungsfelder sind Quarzgüter aller Art, Glasfasern, Lichtleitfasern und optische Gläser. Ein besonders bevorzugtes Anwendungsgebiet sind hochreine Kieselglastiegel für das Ziehen von Siliziumeinkristallen.

In einer weiteren besonderen Ausführungsform können die Dispersionen und/oder die porösen Formkörper und/oder die gesinterten Kieselglaskörper mit Molekülen, Stoffen und Substanzen versetzt sein, die den jeweiligen Formkörpern zusätzliche Eigenschaften vermitteln.

In einer weiteren besonderen Ausführungsform wird die Dispersion und/oder der poröse Formkörper ganz oder teilweise mit Verbindungen versetzt, die eine Cristobalitbildung fördern oder bewirken. Dabei können alle dem Fachmann bekannten Verbindungen verwendet werden, die eine Cristobalitbildung fördern und/oder bewirken, wie z.B. in EP 0753605, US 5053359 oder GB 1428788 beschrieben. Bevorzugt sind hierbei BaOH und/oder Aluminiumverbindungen.

Nach dem Sintern eines solchen Formkörpers erhält man insbesondere Tiegel zum Kristallziehen von Si-Einkristallen, die eine Cristobalitschicht innen und/oder außen besitzen oder ganz aus Cristobalit bestehen. Diese Tiegel eignen sich besonders zum Kristallziehen, da sie temperaturstabiler sind und z. B. eine Siliziumschmelze weniger stark verunreinigen. Dadurch kann eine höhere Ausbeute beim Kristallziehen erreicht werden.
Fig. 1 zeigt die Schichtgrenze an einer Bruchkante eines erfindungsgemäßen SiO₂-Formkörpers.
Fig. 2 zeigt eine rasterelektronenmikroskopische Aufnahme der Textur an der Schichtgrenze im erfindungsgemäßen SiO₂₋Formkörper.
Fig. 3 belegt, dass auftretende Risse im erfindungsgemäßen SiO₂-Formkörper an der Schichtgrenze enden.
Fig. 4 zeigt einen angesinterten Scherben. Die Grenzschicht (Textur) ist noch sichtbar.
Fig. 5 zeigt einen Querschnitt durch einen vollversinterten Scherben. Die Grenzschicht (Textur) ist nicht mehr nachweisbar.
Fig. 6 zeigt die Herstellung eines Formkörpers in 14" Tiegelgeometrie (Fig. 5) wie in Bsp 3 und 4 beschrieben.
Die folgenden Beispiele dienen der weiteren Erläuterung der Erfindung.

### Beispiel 1:

### Herstellung einer SiO₂-Dispersion

In einem 10 Liter Kunststoffbecher wurden 3800 g bidest. H₂O vorgelegt. Mit einem kunststoffbeschichteten Propellerrührer wurden zunächst 712 g Fumed Silica (Hochdisperse Kieselsäure, BET Oberfläche 200 m²/g, erhältlich unter dem Namen Wacker HDK^{®} N20 bei Wacker-Chemie GmbH, München) in 30 min eingerührt. Anschließend wurden portionsweise in 30 min 8188 g Fused Silica (Kieselsäure mittlere Teilchengröße 30 µm), erhältlich unter dem Namen Excelica^{®} SE-30 bei der Firma Tokuyama, zugegeben und dispergiert.
Im Anschluss an die vollständige Dispergierung wurde die Dispersion 10 Minuten einem leichten Unterdruck (0,8 bar) unterzogen, um eventuelle eingeschlossene Luftblasen zu entfernen.

Die so hergestellte Dispersion bestand aus 8900 g Feststoff, was einem Feststoffgehalt von 70 Gew.% entspricht (davon wiederum 92% Fused Silica und 8% Fumed Silica).

### Beispiel 2:

### Herstellung einer SiO₂-Dispersion

In einem 10 Liter Kunststoffbecher wurden 2190 g bidest. H₂O vorgelegt. Mit einem kunststoffbeschichteten Propellerrührer wurden zunächst 187,8 g Fumed Silica (Hochdisperse Kieselsäure, BET Oberfläche 200 m²/g, erhältlich unter dem Namen Wacker HDK^{®} N20 bei Wacker-Chemie GmbH, München) in 30 min eingerührt. Anschließend wurden portionsweise in 30 min 4931,2 g SiO₂-Pulver (auf einen D50 Wert von 12µm gemahlenes MKC 100 Pulver der Firma Mitsubishi) zugegeben und dispergiert.
Im Anschluss an die vollständige Dispergierung wurde die Dispersion 10 Minuten einem leichten Unterdruck (0,8 bar) unterzogen, um eventuelle eingeschlossene Luftblasen zu entfernen.

Die so hergestellte Dispersion bestand aus 5119 g Feststoff, was einem Feststoffgehalt von 70 Gew.% entspricht (mit einem Anteil von 3,5% Fumed Silica bezogen auf die Feststoffmenge).

### Beispiel 3:

### Herstellung eines Formkörpers in 14" Tiegelgeometrie (Fig. 6)

Ein Teil der SiO₂-Dispersion aus Bsp. 1 (1) wird von einem Vorlagebehälter (2) mit einem Druck von 10 bar durch ein Leitungssystem (3) zwischen zwei offenporige Kunststoffmembranen aus Methylmethacrylat (4+5) gepresst. Die Membranen weisen eine Porosität von 30 Vol.% und einen mittleren Porenradius von 20 µm auf. Der Abstand der beiden Membranen zueinander lässt die Bildung eines 8 mm dicken Scherben zu. Die beiden Membrane werden mit einem Schließdruck von 200 bar beaufschlagt.
Durch den Druck, der auf der Dispersion lastet, wird der größte Teil des Wassers der Dispersion in die Membrane gedrückt. Es bildet sich der SiO₂-Scherben. Der Scherben wächst von beiden Seiten der Membrane zur Mitte hin, bis die beiden Teilscherben in der Mitte zusammen wachsen.

Nach Ablauf der Scherbenbildung von 45 min wird der Druck im Vorlagebehälter auf 0 bar Überdruck reduziert. Spezielle in der Membrane verlegte Luft- und Wasserleitungen (6) ermöglichen es, den gebildeten Formkörper (7) durch die poröse Membrane mit Luft oder Wasser zur Endformung zu beaufschlagen. Dabei löst sich der Formkörper von der Membrane.
Zuerst wird der Formkörper von der äußeren Membrane (5) gelöst. Die innere Membrane (4) wird dabei nach oben bewegt. Der Formkörper hängt jetzt an der inneren Membrane (4). Eine formschlüssige Unterlage (8) wird unter den Formkörper positioniert. Danach wird der Formkörper auf die Unterlage abgesetzt und von der inneren Membrane (4) gelöst. Die innere Membrane (4) wird dabei wiederum nach oben gefahren.
Der hergestellte amorphe offenporige poröse Formkörper weist einen Feststoffgehalt von 89 Gew.% und einen Restwassergehalt von 11 Gew.% auf. Nach einer Trocknung bei 90°C für 3 Stunden ist der Formkörper vollständig getrocknet.

### Beispiel 4:

### Herstellung eines Formkörpers in 14" Tiegelgeometrie (Fig. 6)

Ein Teil der SiO₂-Dispersion aus Bsp. 2 (1) wird von einem Vorlagebehälter (2) mit einem Druck von 5 bar durch ein Leitungssystem (3) zwischen zwei offenporige Kunststoffmembranen aus Methylmethacrylat (4+5) gepresst. Die Membranen weisen eine Porosität von 30 Vol.% und einen mittleren Porenradius von 20 µm auf. Der Abstand der beiden Membranen zueinander lässt die Bildung eines 8 mm dicken Scherben zu.
Die beiden Membrane werden mit einem Schließdruck von 60 bar beaufschlagt.
Durch den Druck, der auf der Dispersion lastet, wird der größte Teil des Wassers der Dispersion in die Membrane gedrückt. Es bildet sich der SiO₂-Scherben. Der Scherben wächst von beiden Seiten der Membrane zur Mitte hin, bis die beiden Teilscherben in der Mitte zusammen wachsen.

Nach Ablauf der Scherbenbildung von 30 min wird der Druck im Vorlagebehälter auf 0 bar Überdruck reduziert. Spezielle in der Membrane verlegte Luft- und Wasserleitungen (6) ermöglichen es, den gebildeten Formkörper (7) durch die poröse Membrane mit Luft oder Wasser zur Endformung zu beaufschlagen. Dabei löst sich der Formkörper von der Membrane.
Zuerst wird der Formkörper von der äußeren Membrane (5) gelöst. Die innere Membrane (4) wird dabei nach oben bewegt. Der Formkörper hängt jetzt an der inneren Membrane (4). Eine formschlüssige Unterlage (8) wird unter den Formkörper positioniert. Danach wird der Formkörper auf die Unterlage abgesetzt und von der inneren Membrane (4) gelöst. Die innere Membrane (4) wird dabei wiederum nach oben gefahren.
Der hergestellte amorphe offenporige poröse Formkörper weist einen Feststoffgehalt von 78 Gew.% und einen Restwassergehalt von 22 Gew.% auf. Nach einer Trocknung bei 90°C für 3 Stunden ist der Formkörper vollständig getrocknet.

## Patentansprüche

1. Amorpher poröser offenporiger SiO₂-Formkörper, **dadurch gekennzeichnet, dass** er aus zwei Schichten besteht, und die Schichten eine identische Struktur und Zusammensetzung besitzen.

2. SiO₂-Formkörper gemäß Anspruch 1, **dadurch gekennzeichnet, dass** er einen Feststoffgehalt zwischen 80 und 95 Gew.% aufweist.

3. SiO₂-Formkörper gemäß Anspruch 1 oder 2, **dadurch gekennzeichnet, dass** er eine Dichte zwischen 1,4 g/ cm³ und 1,8 g/cm³ besitzt.

4. SiO₂-Formkörper gemäß Anspruch 1, 2 oder 3, **dadurch gekennzeichnet, dass** er eine Scherbenstärke zwischen 1 und 50 mm besitzt.

5. SiO₂-Formkörper gemäß einem der Ansprüche 1 bis 4, **dadurch gekennzeichnet, dass** er einen Fremdatomanteil, insbesondere an Metallen von ≤300 ppmw, bevorzugt ≤ 100 ppmw, besonders bevorzugt ≤ 10 ppmw und ganz besonders bevorzugt ≤ 1 ppmw, aufweist.

6. Verfahren zur Herstellung eines SiO₂-Formkörpers gemäß einem der Ansprüche 1 bis 5, **dadurch gekennzeichnet, dass** eine SiO₂-Partikel enthaltende Dispersion in eine Druckgussform einer Druckgussmaschine gepumpt wird, in der die Dispersion unter Bildung des SiO₂-Formkörpers über eine innere und eine äußere poröse Kunststoffmembran entfeuchtet wird.

7. Verfahren gemäß Anspruch 6, **dadurch gekennzeichnet, dass** das Befüllen der Druckgussform mit der Dispersion mittels Pumpen erfolgt.

8. Verfahren gemäß Anspruch 6 oder 7 **dadurch gekennzeichnet, dass** das Befüllen mit Drücken zwischen 0,5 und 100 bar erfolgt.

9. Verfahren gemäß einem der Ansprüche 6 bis 8, **dadurch gekennzeichnet, dass** eine Scherbenbildung unter Drücken zwischen 0,5 und 100 bar erfolgt.

10. Verfahren gemäß einem der Ansprüche 6 bis 9, **dadurch gekennzeichnet, dass** es eine Verfahrensdauer zwischen 5 und 90min besitzt.

11. Verfahren gemäß einem der Ansprüche 6 bis 10, **dadurch gekennzeichnet, dass** das Überführen der Dispersion und die Scherbenbildung bei Temperaturen zwischen 20°C und 30°C durchgeführt wird.

12. Verfahren gemäß einem der Ansprüche 6 bis 11, **dadurch gekennzeichnet, dass** die Druckgussform aus zwei porösen Membranteilen besteht, die einen abgeschlossenen Zwischenraum ausbilden, der der gewünschten Formkörperform entspricht.

13. Verfahren gemäß einem der Ansprüche 6 bis 12, **dadurch gekennzeichnet, dass** als poröse Membranen Membranen eingesetzt werden, die eine offene Porosität zwischen 5 und 60 Vol.%, bevorzugt zwischen 10 und 30 Vol.%, besitzen.

14. Verfahren gemäß Anspruch 13, **dadurch gekennzeichnet, dass** eine Membran mit einer Porengröße zwischen 10 Nanometern und 100 Mikrometern eingesetzt wird.

15. Verfahren gemäß einem der Ansprüche 6 bis 14, **dadurch gekennzeichnet, dass** die Dispersion einen Füllgrad an amorphen SiO₂-Partikeln zwischen 65 und 75 Gew.% aufweist.

16. Verfahren gemäß einem der Ansprüche 6 bis 15, **dadurch gekennzeichnet, dass** als Dispersionsmittel Alkohole wie Methanol, Ethanol, Propanol oder Azeton oder Wasser oder deren Mischungen vorliegen.

17. Verfahren gemäß Anspruch 16, **dadurch gekennzeichnet, dass** als Dispersionsmittel Wasser, das einen Widerstand von ≥ 18 MegaOhm*cm aufweist, vorliegt.

18. Verfahren gemäß einem der Ansprüche 6 bis 17, **dadurch gekennzeichnet, dass** die SiO₂-Partikel eine Korngrößenverteilung mit einem D50-Wert zwischen 10-50 µm aufweisen.

19. Verfahren gemäß einem der Ansprüche 6 bis 18, **dadurch gekennzeichnet, dass** die SiO₂-Partikel einen kristallinen Anteil von höchstens 1% aufweisen.

20. Verfahren gemäß einem der Ansprüche 6 bis 19, **dadurch gekennzeichnet, dass** die SiO₂-Partikel in der Dispersion eine bimodale Partikelgrößenverteilung besitzen.

21. Verfahren gemäß einem der Ansprüche 6 bis 20, **dadurch gekennzeichnet, dass** eine Entformung der SiO₂-Formkörper unter Auseinanderfahren der zwei Druckgussformteile und gleichzeitiger Beaufschlagung der porösen Membranen mit Druckluft und/oder Wasser erfolgt.

22. Verfahren gemäß Anspruch 21, **dadurch gekennzeichnet, dass** der entformte SiO₂-Formkörper mittels Vakuumtrocknung, Trocknung mittels heißer Gase wie z.B. Stickstoff oder Luft, Kontakttrocknung oder Mikrowellentrocknung getrocknet wird.

23. Verwendung eines Formkörpers gemäß einem der Ansprüche 1 bis 6 als Filtermaterialien, Wärmedämmmaterialien, Hitzeschilder, Katalysatorträgermaterialien sowie als "preform" für Glasfasern, Lichtleitfasern, optische Gläser oder Quarzgüter.

## Claims

1. Amorphous porous open-pored shaped SiO₂ body, **characterized in that** it consists of two layers and the layers have an identical structure and composition.

2. Shaped SiO₂ body according to Claim 1, **characterized in that** it has a solids content between 80 and 95% by weight.

3. Shaped SiO₂ body according to Claim 1 or 2, **characterized in that** it has a density between 1.4 g/cm³ and 1.8 g/cm³.

4. The shaped SiO₂ body according to one of claims 1, 2 and 3, which has a shell thickness between 1 and 50 mm.

5. Shaped SiO₂ body according to one of Claims 1 to 4, **characterized in that** it has a proportion of atomic impurities, in particular metals ≤ 300 ppmw, preferably ≤ 100 ppmw, particularly preferably ≤ 10 ppmw and more particularly preferably ≤ 1 ppmw.

6. Method for the production of a shaped SiO₂ body according to one of Claims 1 to 5, **characterized in that** a dispersion containing SiO₂ particles is pumped into a pressure casting mold of a pressure casting machine, in which the dispersion is dehydrated via an inner porous plastic membrane and an outer porous plastic membrane to form the shaped SiO₂ body.

7. Method according to Claim 6, **characterized in that** the pressure casting mold is filled with the dispersion by means of pumping.

8. Method according to Claim 6 or 7, **characterized in that** the filling is carried out with pressures between 0.5 and 100 bar.

9. Method according to one of Claims 6 to 8, **characterized in that** a shell formation is carried out at pressures between 0.5 and 100 bar.

10. Method according to one of Claims 6 to 9, **characterized in that** it has a method duration between 5 and 90 min.

11. Method according to one of Claims 6 to 10, **characterized in that** the conversion of the dispersion and the shell formation are carried out at temperatures between 20°C and 30°C.

12. Method according to one of Claims 6 to 11, **characterized in that** the pressure casting mold consists of two porous membrane parts, which form a closed intermediate space that corresponds to the intended shaped body shape.

13. Method according to one of Claims 6 to 12, **characterized in that** membranes which have an open porosity between 5 and 60% by volume, preferably between 10 and 30% by volume, are used as the porous membranes.

14. Method according to Claim 13, **characterized in that** a membrane with a pore size between 10 nanometers and 100 micrometers is used.

15. Method according to one of Claims 6 to 14, **characterized in that** the dispersion has a fill factor of amorphous SiO₂ particles between 65 and 75% by weight.

16. Method according to one of Claims 6 to 15, **characterized in that** alcohols such as methanol, ethanol, propanol, or acetone or water and mixtures thereof are used as the dispersant.

17. Method according to Claim 16, **characterized in that** water which has a resistivity ≥ 18 megaohm*cm is used as the dispersant.

18. Method according to one of Claims 6 to 17, **characterized in that** the SiO₂ particles have a particle size distribution with a D50 value between 10 - 50 µm.

19. Method according to one of Claims 6 to 18, **characterized in that** the SiO₂ particles have a crystalline fraction of at most 1%.

20. Method according to one of Claims 6 to 19, **characterized in that** the SiO₂ particles in the dispersion have a bimodal particle size distribution.

21. Method according to one of Claims 6 to 20, **characterized in that** the shaped SiO₂ body is released from the mold by separating the two pressure casting mold parts and simultaneously applying compressed air and/or water to the porous membranes.

22. Method according to Claim 21, **characterized in that** the shaped SiO₂ body released from the mold is dried by means of vacuum drying, drying by means of hot gases, for example nitrogen and/or air, contact drying or microwave drying.

23. Use of a shaped body according to one of Claims 1 to 6 as filter materials, thermal insulation materials, heat shields, catalyst support materials and as Apreforms@ for glass fibers, optical fibers, optical glasses or quartz articles.

## Revendications

1. Corps moulé en SiO₂ amorphe, poreux, à pores ouverts, **caractérisé en ce qu'**il est constitué par deux couches et les couches présentent une structure et une composition identiques.

2. Corps moulé en SiO₂ selon la revendication 1, **caractérisé en ce qu'**il présente une teneur en solides entre 80 et 95% en poids.

3. Corps moulé en SiO₂ selon la revendication 1 ou 2, **caractérisé en ce qu'**il présente une densité entre 1,4 g/cm³ et 1,8 g/cm³.

4. Corps moulé en SiO₂ selon la revendication 1, 2 ou 3, **caractérisé en ce qu'**il présente une épaisseur de croûte entre 1 et 50 mm.

5. Corps moulé en SiO₂ selon l'une quelconque des revendications 1 à 4, **caractérisé en ce qu'**il présente une proportion d'atomes étrangers, en particulier de métaux ≤ 300 ppm en poids, de préférence ≤ 100 ppm en poids, de manière particulièrement préférée ≤ 10 ppm en poids et de manière tout particulièrement préférée ≤ 1 ppm en poids.

6. Procédé pour la fabrication d'un corps moulé en SiO₂ selon l'une quelconque des revendications 1 à 5, **caractérisé en ce qu'**une dispersion contenant des particules de SiO₂ est pompée dans un moule de moulage sous pression d'une machine de moulage sous pression, dans lequel la dispersion est déshumidifiée avec formation du corps moulé en SiO₂ via une membrane en matériau synthétique poreuse interne et une membrane en matériau synthétique poreuse externe.

7. Procédé selon la revendication 6, **caractérisé en ce que** le remplissage du moule de moulage sous pression avec la dispersion est réalisé au moyen de pompes.

8. Procédé selon la revendication 6 ou 7, **caractérisé en ce que** le remplissage est réalisé à des pressions entre 0,5 et 100 bars.

9. Procédé selon l'une quelconque des revendications 6 à 8, **caractérisé en ce qu'**il se produit une formation de croûte à des pressions entre 0,5 et 100 bars.

10. Procédé selon l'une quelconque des revendications 6 à 9, **caractérisé en ce qu'**il présente une durée de procédé entre 5 et 90 min.

11. Procédé selon l'une quelconque des revendications 6 à 10, **caractérisé en ce** la transformation de la dispersion et la formation de la croûte sont réalisées à des températures entre 20°C et 30°C.

12. Procédé selon l'une quelconque des revendications 6 à 11, **caractérisé en ce que** le moule de moulage sous pression est constitué par deux parties de membrane poreuses, qui forment un espace intermédiaire fermé qui correspond à la forme souhaitée du corps moulé.

13. Procédé selon l'une quelconque des revendications 6 à 12, **caractérisé en ce qu'**on utilise comme membranes poreuses des membranes qui présentent une porosité ouverte entre 5 et 60% en volume, de préférence entre 10 et 30% en volume.

14. Procédé selon la revendication 13, **caractérisé en ce qu'**on utilise une membrane avec une taille de pores entre 10 nanomètres et 100 micromètres.

15. Procédé selon l'une quelconque des revendications 6 à 14, **caractérisé en ce que** la dispersion présente un degré de remplissage de particules de SiO₂ amorphes entre 65 et 75% en poids.

16. Procédé selon l'une quelconque des revendications 6 à 15, **caractérisé en ce que** les dispersants sont des alcools tels que le méthanol, l'éthanol, le propanol, ou l'acétone ou l'eau ou leurs mélanges.

17. Procédé selon la revendication 16, **caractérisé en ce que** le dispersant est l'eau qui présente une résistance ≥ 18 MégaOhms*cm.

18. Procédé selon l'une quelconque des revendications 6 à 17, **caractérisé en ce que** les particules de SiO₂ présentent une répartition granulométrique avec une valeur D50 entre 10-50 µm.

19. Procédé selon l'une quelconque des revendications 6 à 18, **caractérisé en ce que** les particules de SiO₂ présentent une proportion cristalline d'au maximum 1%.

20. Procédé selon l'une quelconque des revendications 6 à 19, **caractérisé en ce que** les particules de SiO₂ dans la dispersion présentent une répartition granulométrique bimodale.

21. Procédé selon l'une quelconque des revendications 6 à 20, **caractérisé en ce que** le démoulage des corps moulés en SiO₂ est réalisé en écartant les deux parties du moule de moulage sous pression et en soumettant simultanément les membranes poreuses à de l'air comprimé et/ou de l'eau.

22. Procédé selon la revendication 21, **caractérisé en ce que** le corps moulé en SiO₂ démoulé est séché par séchage sous vide, par séchage par des gaz chauds, tels que par exemple l'azote ou l'air, par séchage par contact ou par séchage par des microondes.

23. Utilisation d'un corps moulé selon l'une quelconque des revendications 1 à 6 comme matériaux pour filtre, matériaux pour l'isolation thermique, boucliers thermiques, matériaux support pour catalyseurs ainsi que comme "ébauche" pour des fibres de verre, des fibres optiques, des verres optiques ou des objets en quartz.
